# FASCICULE DE BREVET EUROPEEN

(11) **EP 1 078 144 B1**
(45) Date de publication et mention de la délivrance du brevet: **09.11.2005**
(21) Numéro de dépôt: 00909407.9
(22) Date de dépôt: 02.03.2000
(51) Int. Cl.: E21B 17/01, F16L 1/14, F16L 1/18, F16L 1/19

(54) **CONDUITE HYBRIDE POUR GRANDE PROFONDEUR**
HYBRIDROHRLEITUNG FÜR GROSSE TIEFEN
HYBRID PIPE FOR GREAT DEPTH

(30) Priorité: 09.03.1999 FR 9902903; 21.02.2000 FR 0002126
(43) Date de publication de la demande: 28.02.2001
(73) Titulaire: Technip France, 92400 Courbevoie (FR)
(72) Inventeur: KODAISSI, Elie, F-76000 Rouen (FR); COUTAREL, Alain, F-76130 Mont-Saint-Aignan (FR)
(74) Mandataire: Bertrand, Didier
(86) Numéro de dépôt international: PCT/FR2000/000522
(87) Numéro de publication internationale: WO 2000/053884

(56) Documents cités:
- WO-A-99/05388
- FR-A- 2 205 880

## Description

La présente invention concerne une conduite hybride pour grande profondeur.

Plusieurs configurations pour le transport du fluide de gisement entre une tête de puits et/ou un manifold et un équipement de surface ont été proposées.

Les configurations utilisées dépendent en général du site d'exploitation, les paramètres concernant notamment la profondeur d'eau et les mouvements horizontaux et verticaux de l'équipement de surface étant pris en compte pour sélectionner la configuration appropriée et /ou le type de colonne montante (« riser » en anglais).

Une première configuration connue est celle appelée à suspension libre (« free hanging » en anglais). Dans cette configuration, la colonne montante présente d'une part une partie supérieure qui peut être considérée comme étant verticale parce qu'elle fait un angle compris entre 5 et 30° par rapport à une verticale, et d'autre part, une partie inférieure dont une portion est courbe et une portion horizontale reposant sur le fond de la mer. La transition entre les portions courbe et horizontale est réalisée au niveau de la zone de contact (« touch down » en anglais) sur le fond marin. Dans cette configuration et quel que soit le type de colonne montante utilisé, la compensation des mouvements verticaux («heave compensation en anglais) qui induisent un effet de pilonnement est effectuée dans la partie inférieure de la colonne montante, c'est-à-dire, au niveau de la zone de contact. Ce pilonnement entraîne une fatigue importante de la portion courbe de la colonne montante.

Lorsqu'une colonne montante est constituée, dans cette configuration à suspension libre, par un tube rigide ou par deux tubes rigides concentriques, elle est dénommée à suspension catenaire (« Steel Catenary Riser ou SCR » en anglais) ; le rayon de courbure de la portion courbe qui ne doit pas dépasser la limite élastique du matériau métallique constituant le SCR, est relativement grand, de l'ordre de 100 mètres et même davantage. Un tel rayon de courbure important a pour effet d'éloigner le point de contact de la verticale passant par le point de liaison avec l'équipement de surface, ce qui limite son utilisation dans une zone de production comprenant plusieurs points puisqu'à chaque puits il faudrait, en théorie, un SCR. De plus, un SCR accepte très peu de variation verticale pour compenser les mouvements verticaux de l'équipement de surface. En général, la variation verticale doit être inférieure à 1 à 2 % de la profondeur d'eau. De même, les déplacements horizontaux sont limités car ils induisent une fatigue supplémentaire au niveau de la portion courbe. Enfin, le SCR nécessite d'utiliser un joint tournant en partie supérieure à la liaison avec l'équipement de surface.

Malgré ses avantages relatifs à une bonne isolation thermique et un prix linéaire acceptable, il n'en demeure pas moins vrai qu'il est peu utilisé lorsqu'un même équipement de surface doit concerner plusieurs têtes de puits d'exploitation et/ou que les déplacements de l'équipement de surface sont importants par rapport à la profondeur d'eau.

Une conduite flexible peut être utilisée en mer profonde dans la configuration en suspension libre. Elle présente des avantages par rapport au SCR, comme par exemple un rayon de courbure beaucoup plus faible, au niveau de la portion courbe avec le fond marin, ledit rayon de courbure devant être supérieur au MBR (Minimum Bending Radius) et il est typiquement de l'ordre de 2 à 15 m, soit dix fois moins au minimum que pour le SCR. En outre, il permet de plus grands mouvements verticaux et horizontaux de l'équipement de surface grâce à une meilleure tenue en fatigue. Toutefois, il présente les inconvénients d'être très lourd, d'avoir une isolation thermique moins bonne que le SCR et d'avoir un prix linéaire plus élevé que le SCR.

Ainsi, la configuration à suspension libre peut être utilisée dans des mers peu profondes avec un équipement de surface mobile ou fixé sur le fond marin et, en général, dans des sites dans lesquels il y a peu de vagues et de courants marins. Pour des mers profondes, les colonnes montantes sont très lourdes et, pour éviter, des poids suspendus très importants, il est préférable d'avoir recours à d'autres configurations.

Une autre configuration consiste à monter, d'une manière appropriée, des moyens de flottaison à flottabilité positive afin de répartir le poids suspendu entre les parties supérieure et inférieure de la colonne montante. La colonne montante peut être constituée soit par une tour, soit par un SCR combiné à un autre élément qui peuvent présenter diverses configurations de pose dites LAZY, STEEP en « S » ou « wave », ces configurations étant représentées dans les documents API 17B et 17J (AMERICAN PETROLEUM INSTITUTE).

Une tour est montée verticalement depuis le fond marin sur lequel elle est fixée par des moyens appropriés jusqu'à une certaine distance de l'équipement de surface. En raison du poids très important de la tour qui comprend intérieurement un certain nombre de conduits de remontée de fluide notamment, il est prévu d'installer en partie supérieure des moyens énormes de flottaison pour reprendre la majeure partie du poids de la tour. De plus, des chaînettes flexibles, à concavité tournée vers le haut, relient la tour à l'équipement de surface, ces chaînettes qui peuvent être constituées par de courtes longueurs de conduites flexibles (dénommées « jumpers » en anglais) étant destinées entre autre, à permettre des mouvements relatifs entre l'équipement de surface et la tour. Le faisceau de tubulures intégré dans la tour peut comprendre une ou plusieurs tubulures de poussée ou d'injection d'un gaz (« Gas lift » en anglais). De plus, l'amortissement de l'effet de pilonnement (heave compensation) peut être assuré par des vérins montés entre l'équipement de surface et le sommet de la tour.

Une autre configuration hybride utilise une colonne montante dont la partie inférieure est constituée par un SCR et dont la partie supérieure est constituée par une courte conduite flexible (jumper) disposée sur des moyens de flottaison tels qu'une bouée dite arche de flottaison. De cette manière, le poids de la colonne est repris par les moyens de flottaison et le pilonnement est compensé par la chaînette de la courte conduite flexible. Toutefois, la pose des conduites montantes dans toutes les configurations utilisant des moyens de flottaison intermédiaires (« mid water buoyancy » en anglais) est relativement longue et difficile à mettre en oeuvre. En effet, les moyens de flottaison intermédiaires sont montés avant la pose de la colonne montante. Ces moyens de flottaison sont reliés par des lignes d'amarrage à des poids morts ou ancrages fixés dans le fond marin. Ensuite, le SCR est posé en le reliant aux moyens de flottaison. La courte conduite flexible (ou jumper) est reliée à la structure flottante.

Un autre inconvénient est lié à la longueur totale de la colonne qui est plus longue qu'en configuration à suspension libre.

Quant aux configurations LAZY, STEEP « S » ou WAVE utilisant une conduite totalement flexible, il est impératif d'associer des moyens de flottaison à flottabilité positive à une partie de ladite conduite flexible. Dans le cas d'une arche, il faut descendre et fixer le poids mort sur le fond marin à un endroit bien précis et déterminé, puis fixer l'arche au poids mort par des tirants ou des chaînes avant de reprendre la pose de la conduite flexible. Dans le cas de moyens de flottaison constitués par des bouées disposées en chapelet le long d'une partie de la conduite, il est nécessaire d'interrompre la pose de la conduite flexible pour fixer chaque bouée sur ladite partie de conduite, une telle opération étant effectuée sur le pont du navire de pose.

Ainsi quelle que soit la configuration envisagée et le type de colonne montante utilisé, il faut des moyens complémentaires pour reprendre une partie du poids de la colonne montante et/ou des moyens spécifiques pour réduire l'effet du pilonnement dans la zone de contact avec le fond de la mer, tout en gardant à l'esprit que plus le poids de la partie rigide de la colonne montante, lorsqu'elle est intégrée, est élevé et plus les moyens de flottaison sont importants, ce qui engendre une forcé de traînée (« drag diameter » en anglais) et des efforts hydrodynamiques plus importants.

La présente invention a pour but de proposer une nouvelle configuration hybride qui permet d'éliminer l'utilisation de techniques annexes telles que notamment les moyens de flottabilité, les câbles tensionneurs, les joints flexibles ou tournants et les ancrages sur le fond marin.

Un objet de la présente invention est une colonne montante selon la revendication 1 annexée.

Selon une autre caractéristique de la présente invention, la partie centrale rigide est reliée au tronçon supérieur de conduite flexible et à la conduite flexible inférieure par un organe de raccordement fixe.

Un avantage de la présente invention réside dans le fait qu'on obtient une colonne montante rigide dans sa majeure partie et qui présente les propriétés des conduites flexibles au départ de l'équipement de surface et au contact avec le fond marin.

De plus, les sollicitations dynamiques auxquelles peut être soumise la colonne montante hybride sont facilement absorbées ou compensées tant en partie supérieure qu'en partie inférieure de ladite colonne montante, grâce à la présence de véritables conduites flexibles, ce qui permet de grandes excursions de l'équipement de surface à partir duquel est suspendue ladite colonne montante et ce, sans survirage ("overbending" en anglais).

Enfin, grâce au fait qu'il n'est plus nécessaire d'utiliser des moyens de flottaison, l'installation de la colonne montante selon l'invention est effectuée à la manière d'une configuration à suspension libre. De cette manière, on est en présence d'une colonne montante la plus courte possible et avec un prix linéaire moyen sensiblement équivalent à celui d'un SCR tout en utilisant des tronçons flexibles.

En outre, le tronçon flexible supérieur reprend tout le poids de la partie rigide médiane et du tronçon flexible inférieur, alors que ce dernier reprend presque toutes les sollicitations dynamiques engendrées par les mouvements de l'équipement de surface. De ce fait, l'équipement de surface peut se déplacer tant horizontalement que verticalement sur des distances relativement importantes sans provoquer des effets importants sur la colonne montante selon la présente invention, puisque ladite colonne est capable de suivre lesdits mouvements de l'équipement de surface et ce, sans engendrer une fatigue et/ou une usure supplémentaires dans la partie courbe du tronçon inférieur qui, grâce à sa flexibilité, est apte à se déplacer sur le fond marin et à absorber convenablement l'effet de pilonnement.

Selon la présente invention le tronçon inférieur de conduite flexible comprend au moins une portion qui est sous forme de vague et qui est ménagée entre l'extrémité de fixation au tronçon rigide central et le point de contact avec le fond marin.

Un avantage de l'invention, est de réduire l'angle en tête de la colonne montante pour la ramener à 3° environ, ce qui permet d'augmenter l'amplitude des mouvements de ladite colonne montante dans des conditions sévères d'utilisation.

D'autres avantages et caractéristiques ressortiront mieux à la lecture de la description d'un mode de réalisation préféré de l'invention ainsi que des dessins annexés sur lesquels :
- la figure 1 est une représentation schématique d'une plate-forme à la surface de l'eau à laquelle est raccordée une colonne montante selon la présente invention ;

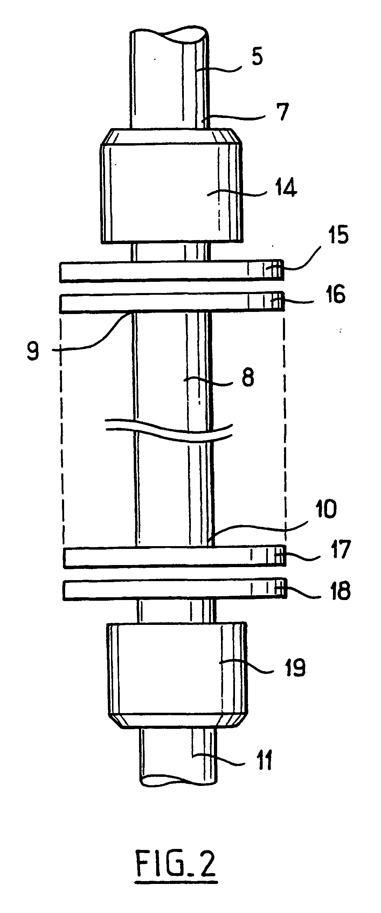

- la figure 2 est une vue partielle de la colonne montante, limitée aux liaisons entre les parties flexibles et la partie rigide ;
- la figure 3 est une vue partielle en perspective d'une conduite flexible qui est raccordée à la partie centrale rigide de la colonne montante ;
- la figure 4 est une représentation partielle et schématique de la portion en forme de vague du tronçon inférieur de la colonne montante de la figure 1 ;
- la figure 5 est une autre représentation partielle et schématique de la portion en forme de vague du tronçon inférieur de la colonne montante de la figure 1 ;
- la figure 6 est une représentation partielle et schématique des moyens utilisés pour obtenir la portion en forme de vague du tronçon inférieur de la colonne montante de la figure 1.

La colonne montante hybride double selon l'invention, appelée ainsi parce qu'elle comprend deux parties flexibles situées de part et d'autre d'une partie centrale rigide, est disposée entre un équipement de surface tel qu'une plate-forme 1 disposée à la surface 2 d'une mer et le fond marin 3, l'équipement de surface pouvant être également constitué par un navire.

La colonne montante 4 comprend une partie supérieure constituée par un tronçon de conduite flexible 5 dont la longueur est prédéterminée et dépendante des mouvements horizontaux de la plate-forme 1 des effets de houle ou des courants marins présents dans la mer, lesquels effets pouvant agir sur le tronçon flexible supérieur 5. De façon typique, la longueur prédéterminée du tronçon de conduite flexible 5 est suffisante pour que la connexion avec le tronçon rigide 8 décrit ci-dessous soit située dans une zone sensiblement non affectée par la houle. Par exemple, la longueur du tronçon supérieur de conduite flexible est comprise entre 50 et 150 m.

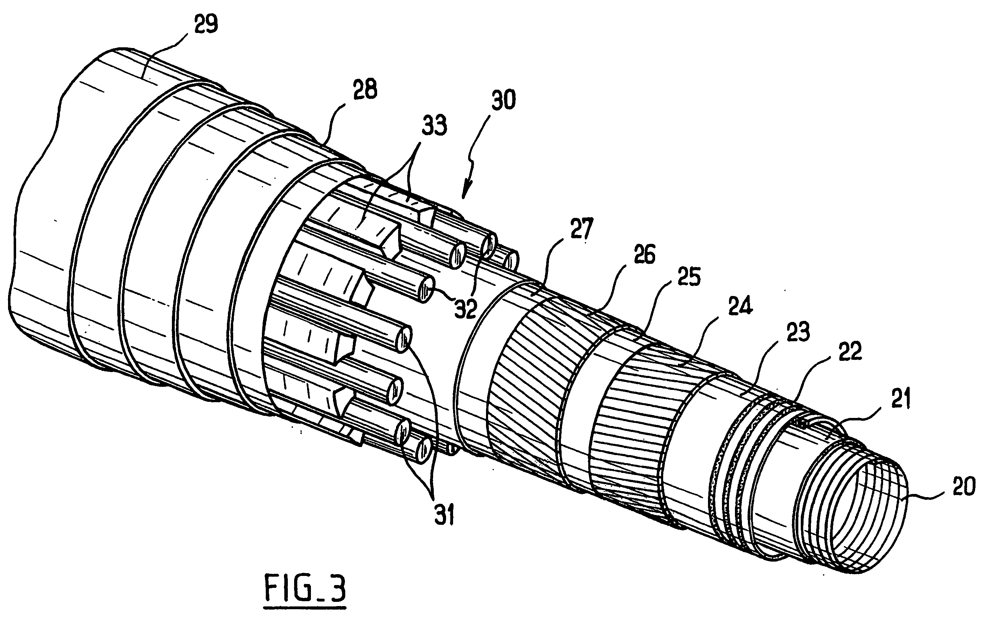

Le tronçon flexible supérieur 5 est de structure connue en soi, comme par exemple celle représentée sur la figure 3 mais aménagée pour jouer le rôle d'une colonne montante ("riser" en anglais) et qui sera décrite ultérieurement. L'extrémité supérieure 6 du tronçon flexible 5 est raccordée à la plate-forme 1 de la même manière qu'est raccordée une conduite flexible classique. Un raidisseur peut être monté sur le tronçon flexible 5, soit au niveau de la liaison avec la plate-forme 1, soit au niveau de la liaison avec la partie rigide 8.

L'extrémité inférieure 7 du tronçon flexible 5 est raccordée à une partie rigide centrale métallique 8 dont la structure est identique ou similaire à une colonne montante rigide classique. Le raccordement est effectué au moyen d'un embout terminal 14 monté à l'extrémité inférieure 7 du tronçon flexible 5 dont la bride 15 est boulonnée à une bride 16 montée sur l'extrémité supérieure 9 de la partie centrale rigide 8.

A l'extrémité inférieure 10 de la partie centrale rigide 8 est raccordée, comme précédemment, une conduite flexible 11 au moyen des brides 17 et 18 et d'un embout 19.

La longueur de la conduite flexible 11 est au moins égale à celle du tronçon flexible 5 et, en général, largement supérieure car une partie de ladite conduite flexible 11 constitue une conduite de fond ("flow line" en anglais) qui est reliée à un équipement de fond, non représenté et qui peut être constitué par un manifold ou une tête de puits ou être prolongée par une conduite de fond rigide ou flexible. De préférence, la longueur de la conduite flexible 11 est supérieure à 200 mètres ou même supérieure à 300 mètres de manière que le point de contact 12 ("touch down" en anglais) avec le fond marin soit situé sensiblement dans la zone de contact d'une conduite flexible librement suspendue entre la plate-forme 1 et le fond marin 3. Il va de soi que la partie de la conduite flexible inférieure 11 qui repose sur le fond marin peut présenter une longueur qui peut atteindre plusieurs centaines de mètres.

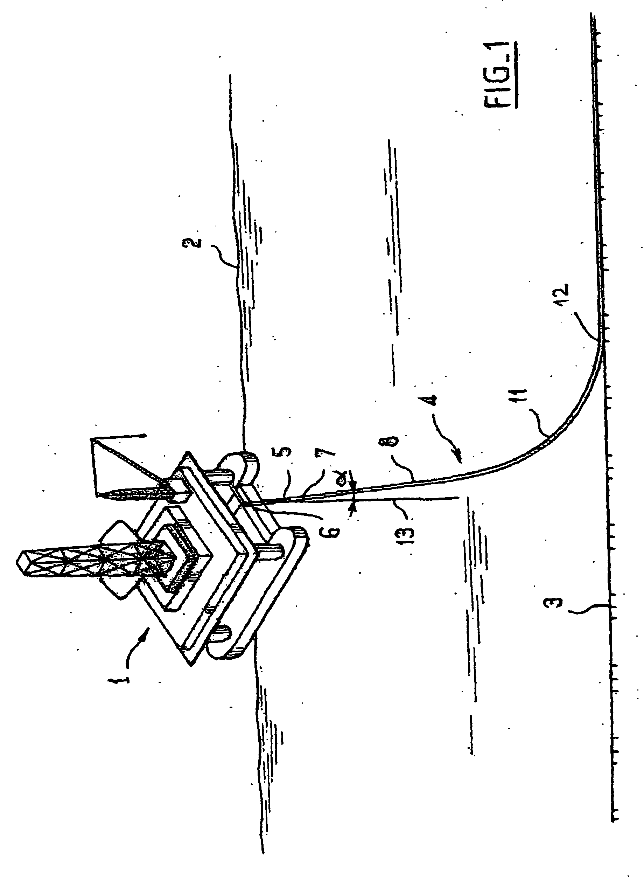

La double colonne montante hybride représentée sur la figure 1 fait un angle α avec une verticale 13 passant par le point de fixation de l'extrémité supérieure 6 du tronçon flexible 5 sur la plate-forme 1, qui est légèrement supérieure à celui que ferait une conduite flexible librement suspendue mais très inférieure à une configuration à suspension caténaire. Dans un exemple de réalisation, l'angle α est compris entre 5 et 25° et, de préférence, sensiblement égal à 10°.

Le tronçon flexible supérieur 5 présente une structure adéquate pour supporter la quasi- totalité des efforts de traction, en la dotant d'une armure ou de nappes d'armures appropriées et d'une voûte de pression-carcasse relativement faible puisque dans les premières centaines de mètres de profondeur de la mer, ledit ensemble n'a pas à supporter une résistance à l'écrasement trop importante du fait de la relative faible pression externe exercée sur ledit tronçon flexible supérieur 5.

Par contre, le pilonnement produit par les mouvements verticaux (ou composantes verticales) de l'équipement de surface tel qu'un bateau ou une plate-forme, sont répercutés quasi intégralement au niveau de la zone ou point de contact avec le fond de la mer 3. La présence d'un tronçon flexible dans la colonne montante, dans cette zone, permet de concevoir une structure pour ledit tronçon flexible qui soit telle qu'il doive résister à la pression externe qui est d'autant plus importante que le gisement est à grande profondeur. A cet effet, le tronçon flexible inférieure 11 présentera une armure ou des nappes d'armures de traction relativement faibles, les efforts de traction étant supportés par le tronçon flexible supérieur 5, mais un ensemble voûte de pression-carcasse capable de résister à l'écrasement et aux composantes circonférentielles développées dans la conduite flexible. De ce fait et grâce à la combinaison des deux tronçons flexibles de chaque côté de la partie rigide intermédiaire, la fatigue de la colonne montante se trouve grandement diminuée tout en autorisant des mouvements latéraux ou horizontaux de l'équipement de surface relativement importants.

La colonne montante selon l'invention peut être dotée d'une isolation thermique passive comme cela est habituellement réalisé, c'est-à-dire que l'ensemble de la colonne comprend une couche externe de matériau isolant ou dans le cas d'une partie rigide à double corps ("pipe in pipe" en anglais) d'une couche isolante disposée entre les corps de la partie rigide et une couche isolante disposée sous la gaine externe d'étanchéité pour les parties flexibles. Dans ce cas, les moyens de poussée ou d'injection de gaz ("gas lift" en anglais) sont indépendants de la colonne montante.

Dans le cas ou une isolation thermique importante est nécessaire, il est préférable de réaliser les tronçons flexibles de la colonne montante comme représenté sur la figure 3, bien que la partie inférieure flexible de ladite colonne montante puisse présenter une structure différente par exemple dépourvue des tubulures de réchauffement et/ou de poussée de gaz.

La figure 3 représente partiellement une structure du tronçon flexible supérieur 5 comprenant de l'intérieur vers l'extérieur :
- une carcasse métallique 20,
- une gaine d'étanchéité interne 21,
- une voûte de pression 22,
- éventuellement une gaine intermédiaire 23,
- une première nappe d'armures de traction 24 enroulée suivant un angle d'armage prédéterminé,
- éventuellement une autre gaine intermédiaire 25,
- une autre nappe d'armures de traction 26,
- éventuellement une troisième gaine intermédiaire 27, l'ensemble 20 à 27 constituant ce qu'il est convenu d'appeler l'âme de la conduite flexible représentée sur la figure 3,
- une isolation thermique 28 disposée entre une gaine d'étanchéité externe 29 et un sous-ensemble 30 comprenant des tubulures 31 et 32 ainsi que des entretoises 33.

Les tubulures 31 régulièrement réparties à la périphérie de l'âme, sont utilisées pour la circulation d'un fluide de chauffage tel que de l'eau, de manière à maintenir la température du fluide de gisement et éviter que ce dernier ne se refroidisse brutalement entre le fond de la mer 3 et la plate-forme 1. Ces tubulures de réchauffage 31 sont reliées de manière appropriée à des conduites analogues disposées dans la partie rigide 8.

Les tubulures 32 également réparties régulièrement à la périphérie de l'âme, par exemple en alternance avec les tubulures de réchauffage 31, sont utilisées pour envoyer un gaz dans le gisement de manière à pousser le fluide de gisement et lui conférer, si besoin était, une pression suffisante.

Les entretoises 33 peuvent être prévues entre les tubulures consécutives afin de bien les immobiliser et les empêcher de se déplacer.

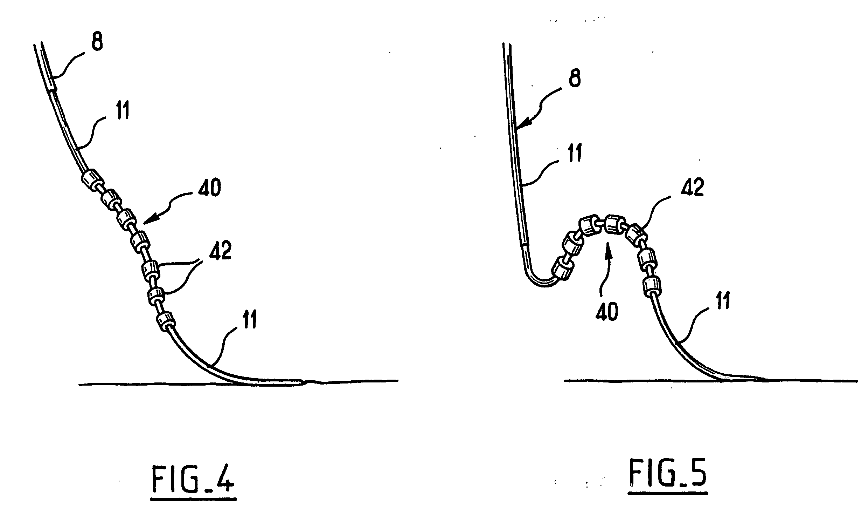

Dans une forme de réalisation, le tronçon de conduite flexible inférieure 11 présente au moins une portion courbe, par exemple sous forme d'une vague 40, de manière à conférer audit tronçon de conduite flexible 11 une flottabilité positive. Divers moyens peuvent être utilisés pour obtenir une portion courbe sous forme de vague, comme ceux représentés sur les figures 4 à 6.

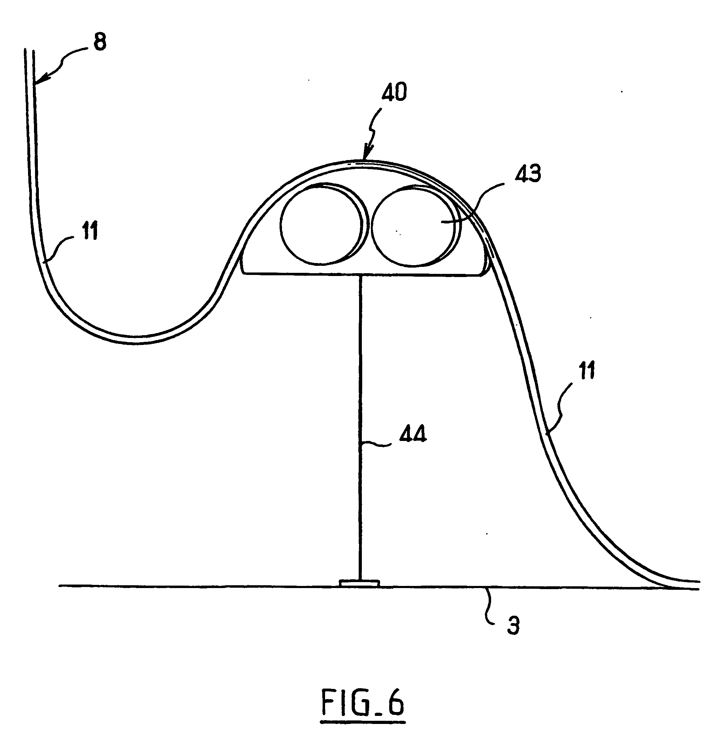

La figure 4 qui est une vue partielle du tronçon de conduite flexible 11 comprend des bouées 42 qui sont réparties sur la portion 40. Dans cet exemple, la vague est sous la forme d'un renflement lorsque le tronçon inférieur 11 est en position normale. Lorsque la plate-forme ou le navire reposant à la surface de l'eau se rapproche du point de contact avec le fond marin 3, la portion 40 se déforme pour affecter la forme d'une vague, comme cela est représenté sur la figure 5, ce qui permet d'éviter tout contact du tronçon central rigide 8 sur le fond marin.

Bien que les bouées 42 soient réparties régulièrement sur toute la portion 40 du tronçon inférieur 11, il est possible de réduire le nombre de bouées et de les répartir seulement à la partie supérieure de la vague, en fonction de la déformation souhaitée pour la portion 40, qui dépend de l'amplitude des mouvements auxquels est soumis le tronçon inférieur 11.

D'autres moyens peuvent être utilisés, comme par exemple ceux représentés sur la figure 6. Dans cet exemple, la portion 40 est en appui partiellement sur une arche 43 qui est ancrée sur le fond marin 3 au moyen d'un organe de liaison souple 44, de manière à permettre à ladite arche de se déplacer dans toutes les directions. L'organe de liaison 44 peut être constitué par un câble ou tout autre organe équivalent.

Il est à noter que la portion en forme de vague permet de réduire l'angle α pour le ramener à environ 3°. De plus, le tronçon inférieur de conduite flexible peut présenter diverses configurations telles que LAZY WAVE avec des bouées de flottaison disposées en chapelet pour avoir une flottabilité distribuée ou LAZY S par l'utilisation de l'arche qui conduit à une flottaison concentrée.

## Revendications

1. Colonne montante pour le transport de fluide entre une tête de puits et/ou un manifold et/ou une conduite de fond sur un fond marin (3) et un équipement de surface (1), comportant une portion horizontale reposant sur le fond marin (3), et une partie centrale rigide métallique (8) dont une extrémité supérieure (9) est reliée à au moins un tronçon supérieur (5) de conduite flexible de longueur prédéterminée et dont l'autre extrémité inférieure (10) est reliée à un tronçon inférieur de conduite flexible (11) de longueur au moins égale à la longueur du tronçon supérieur de conduite flexible.

2. Colonne montante selon la revendication 1, **caractérisée en ce que** la partie centrale rigide (8) est reliée à chaque tronçon de conduite flexible par un organe de raccordement fixe (14, 19).

3. Colonne montante selon la revendication 1 ou 2, **caractérisée en ce que** la longueur du tronçon de conduite flexible supérieur (5) est au moins égale à 150 mètres.

4. Colonne montante selon la revendication 1 ou 2, **caractérisée en ce que** la longueur du tronçon de conduite flexible inférieure (11) est supérieure à 200 mètres.

5. Colonne montante selon la revendication 1 ou 2, **caractérisée en ce que** la partie centrale (8) comprend à l'intérieur des tubulures d'amenée de fluides (31, 32) tels qu'un gaz de remontée ou un fluide de réchauffement.

6. Colonne montante selon la revendication 1, **caractérisée en ce qu'**elle forme avec une verticale (13) passant par le point de fixation sur l'équipement de surface un angle de départ supérieur ou égal à celui d'une configuration à conduite flexible unique et inférieur à celui d'une configuration à suspension caténaire.

7. Colonne montante selon la revendication 6, **caractérisée en ce que** l'angle de départ est compris entre 5 et 25°.

8. Colonne montante selon la revendication 1, **caractérisée en ce que** le tronçon inférieur de conduite flexible (11) comporte au moins une portion qui est sous forme de vague (40) et qui est ménagée entre l'extrémité de fixation à la partie centrale rigide (8) et le point de contact avec le fond marin (3).

9. Colonne montante selon la revendication 8, **caractérisée en ce que** la portion en forme de vague (40) est obtenue au moyen de bouées de flottaison (42) disposées sur au moins la partie supérieure de la vague.

10. Colonne montante selon la revendication 9, **caractérisée en ce que** les bouées de flottaison (42) sont réparties sur sensiblement toute la longueur de la portion en forme de vague (40).

11. Colonne montante selon la revendication 8, **caractérisée en ce que** la portion en forme de vague est obtenue au moyen d'une arche (43) sur laquelle repose ladite portion et qui est ancrée sur le fond marin (3) au moyen d'un organe de liaison souple (44).

## Patentansprüche

1. Steigleitung für den Fluidtransport zwischen einem Bohrlochkopf und/oder einer Rohrverzweigung und/oder einer Bodenleitung auf dem Meeresboden (3) und einer oberirdischen Anlage (1), mit einem horizontalen Abschnitt, der auf dem Meeresboden (3) liegt, und einem metallischen starren Mittelteil (8), wovon ein oberes Ende (9) mit wenigstens einem oberen Teilstück (5) einer fiexiblen Leitung mit vorgegebener Länge verbunden ist und wovon das untere Ende (10) mit einem unteren Teilstück der flexiblen Leitung (11) mit einer Länge, die wenigstens gleich der Länge des oberen Teilstücks der flexiblen Leitung ist, verbunden ist.

2. Steigleitung nach Anspruch 1, **dadurch gekennzeichnet, dass** der starre Mittelteil (8) mit jedem Teilstück der flexiblen Leitung über ein festes Verbindungsorgan (14, 19) verbunden ist.

3. Steigleitung nach Anspruch 1 oder 2, **dadurch gekennzeichnet, dass** die Länge des oberen Teilstücks (5) der flexiblen Leitung wenigstens gleich 150 Meter beträgt.

4. Steigleitung nach Anspruch 1 oder 2, **dadurch gekennzeichnet, dass** die Länge des unteren Teilstücks (11) der flexiblen Leitung größer als 200 Meter ist.

5. Steigleitung nach Anspruch 1 oder 2, **dadurch gekennzeichnet, dass** der Mittelteil (8) innen Zufuhrrohre (31, 32) für Fluide wie etwa ein Hebegas oder ein Wiedererwärmungsfluid umfasst.

6. Steigleitung nach Anspruch 1, **dadurch gekennzeichnet, dass** sie mit einer Vertikalen (13), die durch den Befestigungspunkt an der oberirdischen Anlage verläuft, einen Ausgangswinkel bildet, der größer oder gleich jenem einer Konfiguration mit einer einzigen flexiblen Leitung und kleiner als jener einer Kettenaufhängungskonfiguration ist.

7. Steigleitung nach Anspruch 6, **dadurch gekennzeichnet, dass** der Ausgangswinkel im Bereich von 5 bis 25° liegt.

8. Steigleitung nach Anspruch 1, **dadurch gekennzeichnet, dass** das untere Teilstück (11) der flexiblen Leitung wenigstens einen Abschnitt (40) in Wellenform aufweist und zwischen dem Ende für die Befestigung am starren Mittelteil (8) und dem Kontaktpunkt mit dem Meeresboden (3) ausgebildet ist.

9. Steigleitung nach Anspruch 8, **dadurch gekennzeichnet, dass** der Abschnitt (40) in Wellenform mittels Schwimmbojen (42) erhalten wird, die wenigstens im oberen Teil der Welle angeordnet sind.

10. Steigleitung nach Anspruch 9, **dadurch gekennzeichnet, dass** die Schwimmbojen (42) im Wesentlichen über die gesamte Länge des Abschnitts (40) in Wellenform verteilt sind.

11. Steigleitung nach Anspruch 8, **dadurch gekennzeichnet, dass** der Abschnitt in Wellenform mittels eines Bogens (43) erhalten wird, auf dem der Abschnitt ruht und der auf dem Meeresboden (3) mittels eines nachgiebigen Verbindungsorgans (44) verankert ist.

## Claims

1. Riser for transporting fluid between a well head and/or a manifold and/or a flow line on a sea bed (3) and a surface equipment (1), comprising a horizontal portion lying on the sea bed (3), **characterized in that** it comprises a metallic rigid central part (8), an upper end (9) of which is connected to at least one upper portion (5) of flexible pipe of predetermined length and the other, lower, end (10) of which is connected to a portion (11) of flexible pipe of a length at least equal to the length of the upper portion of flexible pipe.

2. Riser according to Claim 1, **characterized in that** the rigid central part (8) is connected to each portion of flexible pipe by a fixed coupling device (14, 19).

3. Riser according to Claim 1 or 2, **characterized in that** the length of the upper portion (5) of flexible pipe is at least equal to 150 metres.

4. Riser according to Claim 1 or 2, **characterized in that** the length of the lower portion (11) of flexible pipe is greater than 200 metres.

5. Riser according to Claim 1 or 2, **characterized in that** the central part (8) comprises, on its inside, tubes (31, 32) for conveying fluids such as a lifting gas or a heating fluid.

6. Riser according to Claim 1, **characterized in that** it forms, with a vertical line (13) passing through the point of connection to the surface support, a lead-off angle which is greater than or equal to that of a configuration with a single flexible pipe and smaller than that of a steel catenary riser configuration.

7. Riser according to Claim 6, **characterized in that** the lead-off angle is between 5 and 25°.

8. Riser according to Claim 1, **characterized in that** the lower portion (11) of flexible pipe includes at least one section which is in the shape of a wave (40) and which is formed between the end for connection to the rigid central part (8) and the point of contact with the sea bed (3).

9. Riser according to Claim 8, **characterized in that** the wave-shaped section (40) is obtained by means of buoyancy buoys (42) arranged on at least the upper part of the wave.

10. Riser according to Claim 9, **characterized in that** the buoyancy buoys (42) are distributed over approximately the entire length of the section in the shape of a wave (40).

11. Riser according to Claim 8, **characterized in that** the wave-shaped section is obtained by means of an arch (43) on which the said section rests and which is anchored to the sea bed (3) by means of a flexible connecting member (44).
